# EUROPEAN PATENT SPECIFICATION

(11) **EP 4 337 599 B1**
(45) Date of publication and mention of the grant of the patent: **14.05.2025**
(21) Application number: 21742577.6
(22) Date of filing: 18.06.2021
(51) Int. Cl.: C01B 3/04, B01D 53/047, C01B 3/56, C01C 1/12

(54) **AMMONIA CRACKING FOR GREEN HYDROGEN**
AMMONIAKSPALTUNG FÜR GRÜNEN WASSERSTOFF
CRAQUAGE D'AMMONIAC POUR HYDROGÈNE VERT

(43) Date of publication of application: 20.03.2024
(73) Proprietor: Air Products and Chemicals, Inc., Allentown, PA 18106 (US)
(72) Inventor: WHITE, Vincent, Allentown, PA 18195 (US); SHAW, Andrew, Allentown, PA 18195 (US); SALOWAY, Simon Craig, Allentown, PA 18195 (US)
(74) Representative: Beck Greener LLP
(86) International application number: PCT/US2021/037997
(87) International publication number: WO 2022/265649

(56) References cited:
- WO-A1-2020/095467
- CN-A- 111 957 270
- US-A- 4 009 243
- US-A1- 2019 084 831

## Description

### BACKGROUND

Global interest in renewable energy and using this renewable energy to generate green hydrogen has driven the interest in converting the green hydrogen to green ammonia, as ammonia is simpler to transport over distance of hundreds or thousands of miles. Particularly, shipping liquid hydrogen is not commercially possible currently but shipping ammonia, which is in a liquid state, is currently practiced.

For use in a commercial fuel cell, the ammonia must be converted back to hydrogen according to the reaction.

2*NH*₃ 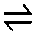

3*H*₂ + *N*₂

This is an endothermic process, i.e., a process that requires heat, and is performed over a catalyst. This process is known as cracking. The gas produced (or "cracked gas") is a combination of hydrogen (H2) and nitrogen (N2). Since the cracking reaction is an equilibrium reaction, there is also some residual ammonia. In most applications of crackers currently, the hydrogen + nitrogen mixture is utilised as is. However, as ammonia can be a poison to fuel cells, this stream, with ammonia suitably removed such as by scrubbing with water, can be used directly in a fuel cell. However, if the hydrogen is to be used in vehicle fueling, the nitrogen present provides a penalty to the process. The fuel to a vehicle fueling system is compressed to significant pressure - up to 900 bar. This means that the nitrogen, which is merely a diluent in the process, is also compressed, taking power, and taking storage volume and increasing anode gas purge requirement, decreasing efficiency. It is therefore beneficial where hydrogen is to be used in vehicle fueling, for the hydrogen + nitrogen to be purified.

Small scale cracking reactors, or "crackers", typically use pressure swing adsorption ("PSA") devices to separate the cracked gas and recover the hydrogen and generate a PSA tail gas (or offgas). However, these crackers are generally heated electrically and the PSA tail gas is typically vented to atmosphere.

As is common in hydrogen production from a steam methane reforming (SMR) reactor, a PSA can be used to purify the nitrogen + hydrogen. The cracking reaction is performed in tubes packed with catalyst which are externally heated by a furnace (see GB1142941).

GB1142941 discloses a process for making town gas from ammonia. The ammonia is cracked and the cracked gas scrubbed with water to remove residual ammonia. The residual ammonia is recovered using a distillation column, and recycled to the cracking process. The purified hydrogen/nitrogen mixture is then enriched with propane and/or butane vapor to produce the town gas for distribution.

US6835360A discloses an endothermic catalytic reaction apparatus for converting hydrocarbon feedstock and methanol to useful gases, such as hydrogen and carbon monoxide. The apparatus comprises a tubular endothermic catalytic reactor in combination with a radiant combustion chamber. The resultant cracked gas is used directly in a fuel cell after passing through a gas conditioning system.

GB977830A discloses a process for cracking ammonia to produce hydrogen. In this process, the hydrogen is separated from the nitrogen by passing the cracked gas through a bed of molecular sieves which adsorbs nitrogen. The nitrogen is then driven off the bed and may be stored in a holder.

JP5330802A discloses an ammonia cracking process in which the ammonia is contacted with an ammonia decomposition catalyst at a pressure of 10 kg/cm2 (or about 9.8 bar) and a temperature of 300 to 700°C. Hydrogen is recovered from the cracked gas using a PSA device. The reference mentions that the desorbed nitrogen may be used to boost the upstream process but no details are provided.

US2007/178034A discloses a process in which a mixture of ammonia and hydrocarbon feedstock is passed through a fired steam reformer at 600°C and 3.2 MPa (or about 32 bar) where it is converted into a synthesis gas containing about 70 vol. % hydrogen. The synthesis gas is enriched in hydrogen in a shift reaction, cooled and condensate removed. The resultant gas is fed to a PSA system to generate a purified hydrogen product having 99 vol. % hydrogen or more. The offgas from the PSA system is fed as fuel to the fired steam reformer.

CN111957270A discloses a process in which ammonia is cracked in a tubular reactor within a furnace. The cracked gas is separated by adsorption to produce hydrogen gas and a nitrogen-rich offgas. The fuel demand of the furnace appears to be satisfied using a combination of cracked gas, hydrogen product gas and/or offgas.

US2020/123006 discloses a process for cracking ammonia using heat generated by the non-catalytic partial oxidation of ammonia with an oxygen containing gas. The residual ammonia is separated from the process gas and recycled for use in the oxidation process.

There is a need generally for improved processes for the production of hydrogen from ammonia and specifically for processes that are more efficient in terms of energy consumption and/or that have higher levels of hydrogen recovery and/or that reduce or eliminate the need to combust fossil fuels.

In the following discussion of embodiments of the present invention, the pressures given are absolute pressures unless otherwise stated.

### BRIEF SUMMARY OF THE INVENTION

According to a first aspect of the present invention, there is provided a method for producing hydrogen from ammonia, comprising:
pressurizing liquid ammonia feed comprising water as a trace impurity to produce pressurized liquid ammonia feed;
combusting a primary fuel in a furnace to heat catalyst-containing reactor tubes and to form a flue gas;
supplying heated ammonia to the catalyst-containing reactor tubes to cause cracking of the ammonia into a cracked gas containing hydrogen gas, nitrogen gas and residual ammonia;
cooling the cracked gas by heat exchange to produce cooled cracked gas;
scrubbing ammonia from the cooled cracked gas using water in a scrubbing column to produce ammonia-depleted cracked gas and an aqueous ammonia solution;
stripping ammonia from the aqueous ammonia solution in a distillation column system to produce water-depleted ammonia feed vapour and an aqueous ammonia-depleted bottoms liquid;
heating the water-depleted ammonia feed vapour by heat exchange with one or more hot fluids to produce the heated ammonia;
purifying the ammonia-depleted cracked gas in a first PSA device to produce a first hydrogen product gas and a first PSA tail gas;

characterised in that the pressurised liquid ammonia feed is heated and vaporised by heat exchange against the one or more hot fluids to produce ammonia feed vapour which is fed to the distillation column system to remove water from the ammonia feed vapour,
wherein the one or more hot fluids comprises the cracked gas and/or the flue gas.

The liquid ammonia feed is typically pressurized to a pressure that is greater than 1.1 bar, e.g. at least 5 bar or at least 10 bar. In some embodiments, the liquid ammonia is pressurized to a pressure in a range from about 5 bar to about 50 bar, or in a range from about 10 to about 45 bar, or in a range from about 30 bar to about 40 bar.

Typically the liquid ammonia feed has small quantities of water added to it to prevent stress corrosion cracking in vessels during shipping and storage. The liquid ammonia feed contains water as a trace impurity, for example in an amount in the range from about 0.1 wt. % to about 0.5 wt. %, typically in an amount of about 0.2 wt. %. The water should be removed from the feed ammonia to prevent damage to the ammonia cracking catalyst. Some catalysts, for example iron based catalysts are water intolerant and are less compatible with feedstock containing water.

The liquid ammonia feed is heated and vaporised to produce ammonia feed vapour. The temperature of ammonia feed vapour being fed to the distillation column system is typically in a range from about 25°C to about 90°C which ensures that the water was also carried through to the distillation system with the vaporised ammonia. The actual temperature is determined by the boiling point of ammonia at the pressure to which it has been pumped. The vaporized ammonia entering the column may contain a small (e.g. 1 to 2 %) water-rich liquid phase that will be carried through to the distillation system. Alternatively, the water-containing ammonia stream may be vaporized leaving a water-rich liquid stream that may be fed to the distillation system separately.

The water is removed from the ammonia feed vapour using the distillation column system. As the ammonia feed is already vapourised it can be introduced near the top of the distillation column system. The water-depleted ammonia feed vapour produced typically contains less than 5 ppm, preferably less 2 ppm, more preferably less than 1 ppm water.

The water-depleted ammonia feed vapour is typically heated to produce heated ammonia at a temperature greater than about 250°C, e.g. in a range from about 350°C to about 800°C, or from about 400°C to about 600°C.

The temperature is ultimately determined by the identity of the catalyst, the operating pressure and the desired "slip", i.e. the amount of ammonia that passes through the cracking reactor without being cracked. In this regard, the process is typically operated with no more than about 4% slip which would be the amount of slip if the cracking process were operated 5 bar and 350°C with a close approach to equilibrium. Problems may arise with some construction materials at any appreciable pressure at temperatures above about 700°C.

The cracking reaction takes place in catalyst-filled reactor tubes that are heated by a furnace. However, in theory any heterogeneously catalysed gas reactor could potentially be used for the conversion.

There are a large number of catalysts known in the art as useful for the ammonia cracking reaction and any of these conventional catalysts may be used in this invention. Iron-based catalysts are commonly used in the Haber-Bosch process for the manufacture of ammonia and so, since both processes are the same equilibrium-limited reaction, it is expected that such an iron-based catalyst could be utilised for the ammonia cracking process. However, it is well-known in ammonia production processes that the catalyst is poisoned by ppm levels of water and oxygen present in the feed. Therefore, it is expected that if iron-based catalysts are used, the water in the feed ammonia would need to be removed.

The primary fuel for the furnace typically comprises hydrogen, ammonia, cracked gas and/or PSA tail gas although the primary fuel preferably comprises methane. The fuel may be pure methane but is more likely natural gas or biogas.

The PSA device may operate a PSA cycle or a vacuum swing adsorption (VSA) cycle. Suitable PSA cycles include any of the cycles disclosed in US9381460, US6379431 and US8778051, the disclosures of which are incorporated herein by reference.

In a normal PSA system with a single PSA device, the recovery of hydrogen is typically in the range of about 75% to 85%. However, there are two options for increasing recovery. First, the PSA tail gas may be recycled to the first PSA. In such embodiments, the first PSA tail gas may be compressed and the compressed PSA tail gas recycled to the first PSA device. Recycling in this way can achieve an overall hydrogen recovery of about 94% to about 96%.

Alternatively, two PSA devices may be used in series and the first PSA tail gas is further processed in the second PSA device. In these embodiments, the process comprises compressing the first PSA tail gas to produce a compressed PSA tail gas; and purifying the compressed PSA tail gas in a second PSA device to produce a second PSA tail gas and a second hydrogen product gas. Further processing in this way can achieve an overall hydrogen recovery of about 95% to about 97%. For example, if the first PSA device achieves 83% recovery and the second PSA achieves 80% recovery, then the overall recovery is 96.6%.

In these embodiments, the second hydrogen gas may be combined with the first hydrogen product gas to form a combined hydrogen product gas.

Similarly to the first PSA device, the second PSA device may operate a PSA cycle or a vacuum swing adsorption (VSA) cycle. Suitable PSA cycles include any of the cycles disclosed in US9381460, US6379431 and US8778051.

The PSA tail gas from either the first PSA device or the second PSA device may be fed as a secondary fuel for combustion in the furnace. Preferably, the PSA tail gas is warmed by heat exchange against the one or more hot fluids and/or optionally mixed with the primary fuel before being fed to the furnace.

The PSA tail gas, or a gas derived therefrom, can be separated using a membrane separator to discharge a nitrogen-rich retentate gas and recycle a hydrogen-rich permeate gas for further processing in the PSA device and/or for mixing into the hydrogen product gas,

Like hydrogen, ammonia is a "fast gas" that readily permeates across membranes used for gas separation. Some membranes, such as those constructed of polyamide or polysulfone polymers, are more tolerant of ammonia. However, some membranes, such as those constructed of polyimide polymers, are less tolerant of ammonia. Therefore, ammonia is typically removed, or its concentration is at least reduced, upstream of the membrane separator.

The cooled cracked gas is typically produced by heat exchange against the pressurised liquid ammonia feed and the water-depleted ammonia feed vapour, and optionally against the primary fuel source, air supply to the furnace, and/or PSA tail gas.

Ammonia is removed from the cooled cracked gas by absorption in water, e.g. by washing the gas with water in a scrubbing column. The resultant ammonia-depleted gas and aqueous ammonia solution are separated so the ammonia-depleted gas can be further processed without the ammonia causing any difficulties. Ammonia is recovered from the aqueous ammonia solution by stripping in the distillation column system. Preferably, the aqueous ammonia solution is pumped from the scrubbing column to the distillation column system. Such a process may be also be applied to the PSA tail gas prior to being supplied to the membrane separator.

Recovering the ammonia from the cracked gas not only simplifies the hydrogen purification steps but, as the recovered ammonia is recycled to the ammonia feed, it may increase the recovery of hydrogen from the ammonia. It also removes ammonia from the feed to the burners, reducing concerns over production of oxides of nitrogen (NOx) caused by combusting ammonia.

The distillation column system typically produces overhead vapour containing ammonia and an aqueous bottoms liquid. Part of bottoms liquid from the distillation column may be purged. Additionally or alternatively, all or part of the bottoms liquid from the distillation column may be reboiled. In this regard, the bottoms liquid in or from the distillation column system may be reboiled by heat exchange against the one or more hot fluids.

In other embodiments, the bottoms liquid in or from the distillation column system is reboiled using an electrically powered heater. The heater may be powered at least in part by electricity generated from at least one renewable source, such as solar, wind, or tidal energy, as this would reduce the carbon intensity of the process.

Aqueous bottoms liquid from the distillation column system can be fed to the scrubbing column. Prior to entering the scrubbing column, the aqueous bottoms liquid is preferably cooled by heat exchange with a coolant, preferably the aqueous ammonia solution being fed to the distillation system from the scrubbing column.

In some preferred embodiments, the overhead vapour in or from the distillation column system is partially condensed by heat exchange against a coolant to produce a condensed stream and the water-depleted ammonia feed vapour. The condensed stream is then used as reflux for the distillation column system.

According to a second aspect of the present invention, there is provided apparatus for producing hydrogen from ammonia comprising:
a pump for pressurizing liquid ammonia feed comprising water as a trace impurity to produce pressurized liquid ammonia feed;
at least one first heat exchanger in fluid communication with the pump for vaporizing pressurized liquid ammonia by heat exchange with one or more hot fluids to produce ammonia feed vapour;
catalyst-containing reactor tubes in fluid communication with the first heat exchanger(s) for cracking heated ammonia from the first heat exchanger(s) to produce a cracked gas containing hydrogen gas, nitrogen gas and residual ammonia;
a furnace in thermal communication with the catalyst-containing reactor tubes for combustion of a fuel to heat the catalyst-containing reactor tubes and to form a flue gas;
a flue gas conduit for feeding flue gas from the furnace to the at least one first heat exchanger(s);
a cracked gas conduit for feeding cracked gas to the at least one first heat exchanger(s);
a scrubbing column in fluid communication with the at least one first heat exchanger(s) for scrubbing ammonia from cooled cracked gas after passage through the first heat exchanger(s) using water to produce ammonia-depleted cracked gas and an aqueous ammonia solution;
a distillation column system in fluid communication with the scrubbing column for stripping ammonia from the aqueous ammonia solution to produce water-depleted ammonia feed vapour and an aqueous ammonia-depleted bottoms liquid;
an ammonia feed vapour conduit for feeding ammonia feed vapour from the first heat exchanger(s) to the distillation column system;
a water-depleted ammonia feed vapour conduit for feeding water-depleted ammonia feed from the distillation column system to the first heat exchanger(s) for further heating by heat exchange with one or more of the hot fluids to produce the heated ammonia;
a PSA device in fluid communication with the scrubbing column for purifying the ammonia-depleted cracked gas to produce a hydrogen product gas and a first PSA tail gas; and
a hydrogen product gas conduit for removing hydrogen product gas from the PSA device.

The furnace may be separate from the catalyst-filled reactor tubes although the furnace and the catalyst-filled reactor tubes are preferably integrated within the same unit. In preferred embodiments, a steam methane reforming (SMR) type reactor is used in which the furnace comprises a radiant section through which pass the catalyst-containing reactor tubes.

A compressor may be provided downstream of the first PSA device for compressing the first PSA tail gas to produce compressed PSA tail gas. The compressor may consist of one or more stages and cooling will take place between each stage and after the final stage. Water will typically condense out of the compressed PSA tail gas at the interstages or at the aftercooler stage. The aqueous condensate is typically removed after each cooling stage of the compressor and a small amount of ammonia will come out of the first PSA tail gas with this condensate.

In some preferred embodiments, the apparatus comprises:
a compressor in fluid communication with the first PSA device for compressing the first PSA tail gas to produce compressed PSA tail gas; and
a recycle conduit for recycling the compressed PSA tail gas to the first PSA device.

In some alternative preferred embodiments, the apparatus comprises:
a compressor in fluid communication with the first PSA device for compressing the first PSA tail gas to produce compressed PSA tail gas;
a second PSA device in fluid communication with the compressor for purifying the compressed PSA tail gas to produce a second PSA tail gas and a second hydrogen gas;
a second hydrogen gas conduit for removing second hydrogen gas from the second PSA device; and
a second PSA tail gas conduit for removing the second PSA tail gas from the second PSA device.

In these embodiments, the first and second hydrogen gas conduits combine to form a hydrogen product gas conduit.

In some preferred embodiments, part or all of the first PSA tail gas and/or second PSA tail gas can be recycled and used as a secondary fuel for combustion in the furnace. In these embodiments, the apparatus comprises a conduit for feeding first PSA tail gas and/or second PSA tail gas to the furnace. Preferably, the conduit is in fluid communication with the first heat exchanger(s) for heating by heat exchange against the one or more hot fluids prior to combustion in the furnace.

The invention will now be described by way of example only with reference to the following drawings.

### BRIEF DESCRIPTION OF THE DRAWINGS

Fig. 1 is a process flow diagram of a first reference example of an ammonia cracking process to produce hydrogen;
Fig. 2 is a process flow diagram of another reference example based on the ammonia cracking process of Fig. 1 in which no hydrogen product is used as fuel
Fig. 3 is a process flow diagram of a further reference example based on the ammonia cracking process of Figs. 1 & 2 in which only PSA tail gas is used as fuel;
Fig. 4 is a process flow diagram of a reference ammonia cracking process including recovery of residual ammonia from the cracked gas; and
Fig. 5 is a process flow diagram of an embodiment of an ammonia cracking process to produce hydrogen wherein water is removed from the feed ammonia according to the present invention.

### DETAILED DESCRIPTION OF THE INVENTION

A process is described herein for producing hydrogen by cracking ammonia. The process has particular application to producing so-called "green" hydrogen which is hydrogen created using renewable energy instead of fossil fuels. In this case, the ammonia is typically produced by electrolyzing water using electricity generated from renewable energy, such as wind and/or solar energy, to produce hydrogen which is then reacted catalytically with nitrogen (Haber process) to produce the ammonia which is more easily transported than hydrogen. After reaching its destination, the ammonia is then cracked to regenerate the hydrogen.

In this inventive process, heat required for the reaction is typically provided by combustion of PSA tail gas (which usually contains some amount of residual hydrogen and ammonia) in the furnace. If the PSA tail-gas has insufficient heating value than either vaporised ammonia, a portion of the product hydrogen, or another fuel may also be used.

In practice, natural gas could be used as a fuel, together with the PSA tail gas, as is practiced in SMRs for hydrogen. However, with the desire to maintain the "green" or renewable credentials of the hydrogen so produced, there is an incentive to use a "renewable fuel". This can be the cracked "renewable" ammonia, the ammonia itself, or another renewable energy source, such as biogas, or indeed electric heating whether the electricity is itself from a renewable source, in this case local to the cracking process as opposed to the renewable electricity used to generate the hydrogen which has been transported in the form of ammonia.

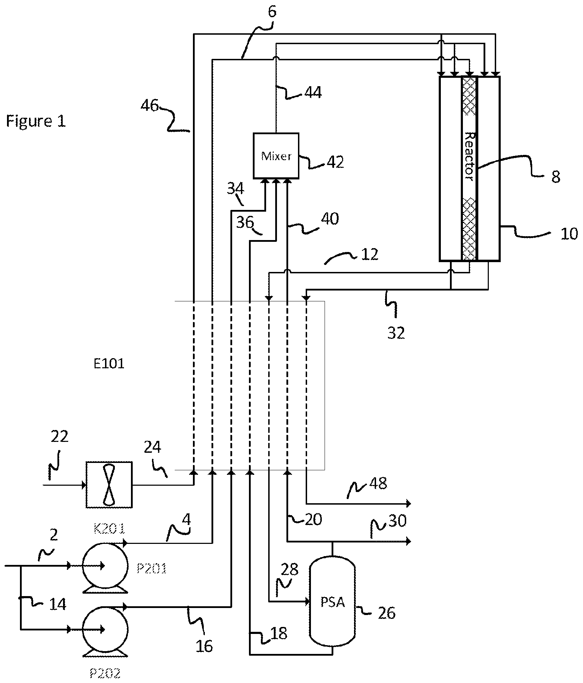

A reference example of the process is shown in Fig. 1. The process takes liquid ammonia from storage (not shown). The ammonia to be cracked (line 2) is pumped (pump P201) as liquid to a pressure greater than the desired cracking pressure (see GB1142941). The reaction pressure is a compromise between operating pressure and conversion according to Le Chatelier's principle. There is an incentive to operate the reactor (8) at higher pressure because pumping liquid ammonia requires less power and capital than compressing the product hydrogen.

The pressurised liquid ammonia (line 4) is then heated, vaporised (if it is below its critical pressure) and heated further, up to a temperature of greater than 250 °C via a heat exchanger (E101) using the heat available in the cracked gas leaving the reaction tubes and the flue gas from the furnace. In the figure, the heat exchanger (E101) is shown as one heat exchanger but, in practice, it will be a series of heat exchangers in a network.

The initial heating and vaporization of the pressurized liquid ammonia may alternatively take place against an alternative heat source, such as cooling water or ambient air. Typical reaction temperatures are greater than 500 °C (see US2601221), palladium-based systems can run at 600 °C and 10 bar, whereas RenCat's metal oxide-based system runs at less than 300 °C and 1 bar. (See https://www.ammoniaenergy.org/articles/ammonia-cracking-to-high-purity-hydrogen-for-pem-fuel-cells-in-denmark/). The operating pressure of the cracker is typically an optimization of several factors. Cracking of ammonia into hydrogen and nitrogen s favored by low pressure but other factors favor higher pressure, such as power consumption (which is minimized by pumping the feed ammonia rather than compressing the product hydrogen), and the PSA size (which is smaller at higher pressure).

The hot ammonia (line 6) enters reaction tubes of a reactor (8) at the desired pressure where additional heat is provided by the furnace (10) to crack the ammonia into nitrogen and hydrogen. The resulting mixture of residual ammonia, hydrogen and nitrogen exits (line 12) the reaction tubes of the reactor (8) at the reaction temperature and pressure. The reaction products are cooled in a heat exchanger (E101) against a combination of feed ammonia (from line 4), furnace fuel (in this case pumped ammonia from line 14, pump P202 and line 16; PSA tail gas from line 18; and product hydrogen to be used as fuel in line 20) and combustion air (from line 22, fan K201 and line 24) to reduce the temperature as close as possible to that required for the inlet of a PSA device (26). Any residual heat in the cracked gas mixture (line 28) is removed in a water cooler (not shown) to achieve an inlet temperature to the PSA device (26) of in a range from about 20°C to about 60°C, e.g. about 50°C.

The PSA product (line 30) is pure hydrogen compliant with ISO standard 14687 - Hydrogen Fuel Quality - with residual ammonia < 0.1 ppmv and nitrogen < 300 ppmv - at approximately the reaction pressure. The product hydrogen (line 30) is further compressed (not shown) for filling into tube trailers (not shown) for transport or it may be liquefied in a hydrogen liquefier (not shown) after any required compression. The PSA tail gas (line 18) or "purge gas" from the PSA device (26) is shown as being heated via the heat exchanger E101, using the cracked gas (line 12) leaving the reaction tubes of the reactor (8) or furnace flue gas (line 32), before being sent (in line 36) to the furnace as a combustion fuel. However, the PSA tail gas (line 18) may be fed directly to the furnace (10) without heating.

The resultant warmed ammonia fuel (line 34) and warmed hydrogen (line 40) are depicted as combined with the (optionally) warmed PSA tail gas (line 36) in a mixer (42) to produce a combined fuel which is fed (line 44) to the furnace (10) for combustion to generate the flue gas (line 32 and, after cooling in E101, line 48). However, it should be noted that one or more of the fuels could be fed directly to the furnace without prior mixing. The warmed air (for combustion of the fuel) is fed to the furnace (10) in line 46.

One of the aims of preferred embodiments of the present process is to maximise the amount of hydrogen generated by cracking the renewable ammonia. That means minimising the amount of hydrogen used as fuel, or ammonia if ammonia were to be used as a fuel directly. Therefore, heat integration is important so as to use the hot flue gas and cracked gas appropriately, for instance to preheat air (line 24) and ammonia (line 4) to the cracker as this reduces the amount of "fuel" to be used in the burners of the furnace (10). This leads to higher hydrogen recovery as less of the hydrogen is lost in the furnace flue gas (lines 32 & 48) as water. Therefore, steam generation, for instance, should be minimised in favour of intra-process heat integration.

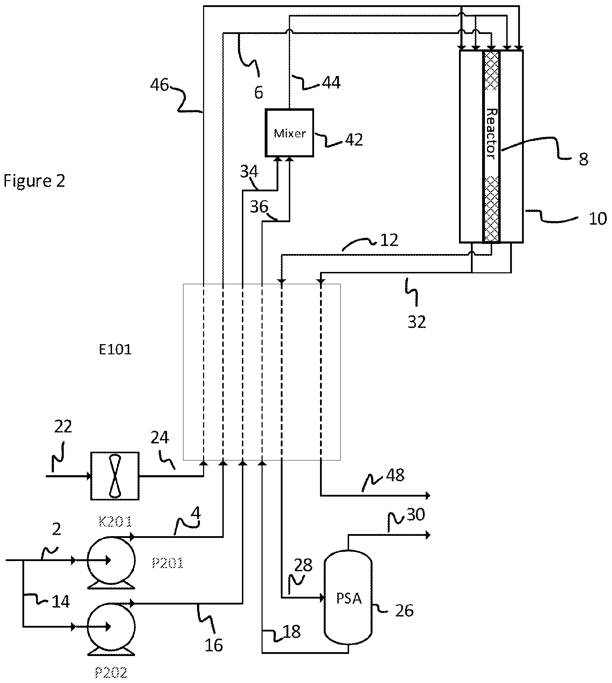

Fig. 1 shows ammonia provided as fuel (lines 34 & 44) and feed (line 6) and it also shows product hydrogen as fuel (lines 40 & 44) - in practice, it is likely only one of these streams would be used as fuel. In this regard, Fig. 2 depicts a similar process to that of Fig. 1 in which ammonia is used as a fuel (line 34) but not product hydrogen. All other features of the process depicted in Fig. 2 are the same as in Fig. 1 and the common features have been given the same reference numerals.

The inventors are aware that stable combustion of ammonia is facilitated if hydrogen is also used as a fuel, particularly at start-up and warm-up.

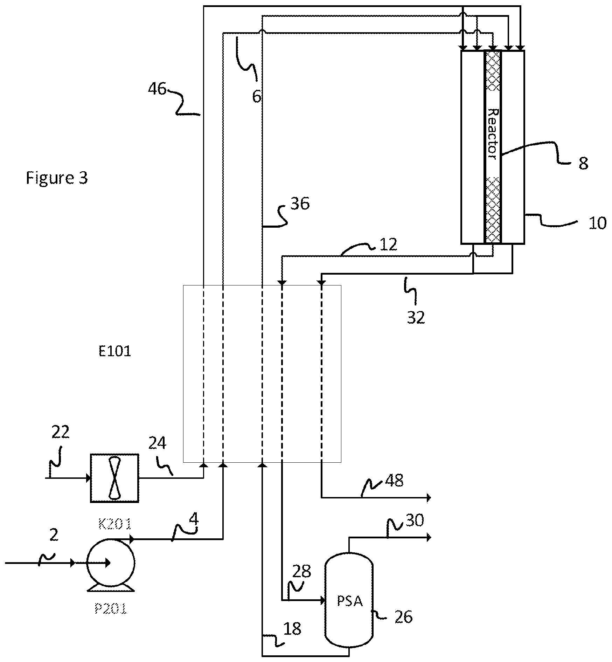

Fig. 3 depicts a process similar to that depicted in Fig. 2. In this process, the recovery of hydrogen (line 30) from the PSA may be adjusted to provide a tail gas (line 18) which, when burned, will provide all the heat required by the process, thus eliminating the need for a trim fuel. All other features of the process depicted in Fig. 3 are the same as in Fig. 1 and the common features have been given the same reference numerals.

Should there be a viable alternative source of renewable energy for the cracking reactions, as discussed above, one could consider recovering hydrogen from the PSA tail gas to increase the net hydrogen production from the process in addition to the hydrogen produced from the PSA. Such a process could use membranes in series or in parallel to separate hydrogen from the nitrogen rich PSA tail gas stream.

The cracked gas (line 12) contains residual amounts of ammonia which can be removed and recycled to the cracking process. This has two benefits; first, it simplifies the adsorption process and secondly, it allows recovery of uncracked ammonia back to the process by stripping the ammonia from the water in a distillation system. Ammonia may need to be removed particularly but not exclusively if membranes are being used as part of the separation process since membrane material can be intolerant of ammonia and ammonia is a fast gas and would permeate with the hydrogen so would accumulate in the process if not removed. NH3 may be removed for instance by a water wash or other well-known technology for ammonia removal, upstream of the membrane. The ammonia recovered in the ammonia removal step can be recovered to the feed to the cracking process using a distillation system to recover the ammonia from the water used to absorb the ammonia from the cracked gas. This could theoretically increase the hydrogen recovery from the process up to 100%. Recovering NH3 from the cracked gas simplifies the hydrogen purification steps, may increase the recovery of hydrogen from the ammonia if the separated ammonia is recovered as feed, and also removes ammonia from the feed to the burners, at least reducing and possibly eliminating concerns over production of NOx caused by burning NH3.

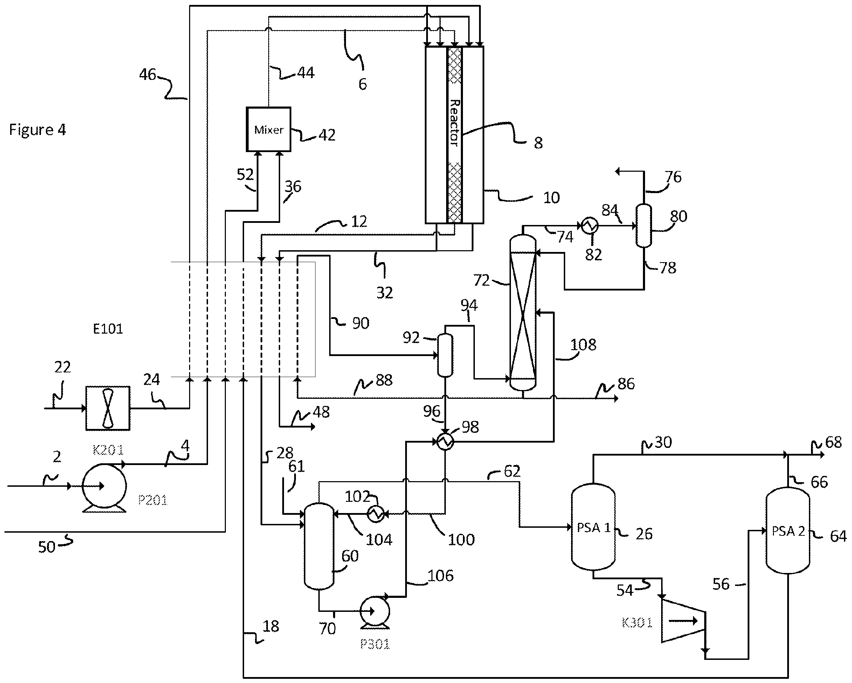

Fig. 4 depicts a process involving a conventional means of recovering residual ammonia from the cracked gas and recycling the recovered ammonia to the catalyst-containing reactor tubes for cracking. The features of the process in Fig. 4 that are common to the processes of Figs. 1 to 3 have been given the same reference numerals. The following is a discussion of the new features in Fig. 4.

A fuel (line 50) is warmed in the heat exchange (E101). The resultant warmed fuel (line 52) is combined with the warmed PSA tail gas (line 36) in a mixer (42) to produce a combined fuel which is fed (line 44) to the furnace (10) for combustion to generate the flue gas (line 32 and, after cooling in E101, line 48). However, it should be noted that one or more of the fuels could be fed directly to the furnace without prior mixing. The warmed air is fed to the furnace (10) in line 46.

The cracked gas is cooled in a heat exchanger (E101) against a combination of feed ammonia (from line 4), furnace fuel (in this case fuel in line 50; PSA tail gas from line 18) and combustion air (from line 22, fan K201 and line 24) to reduce the temperature as close as possible to that required for the inlet of a scrubbing column (60). The inlet temperature to the scrubbing column (60) is preferably in a range from about 5°C to about 30°C, e.g. about 10°C.

The cooled cracked gas (line 28) is fed to a scrubbing column (60) where water (line 61) is used to recover the residual ammonia from the cracked gas to produce ammonia-depleted cracked gas and an aqueous ammonia solution. The aqueous ammonia solution is (line 70) transferred to the distillation column system (72) using a pump (P301). IN some embodiments, there may be no need to use a pump for this purpose.

The distillation column system (72) removes the water from the aqueous ammonia solution to produce water-depleted ammonia feed vapour and an aqueous ammonia-depleted bottoms liquid. The water-depleted ammonia feed vapour is recycled via line 76 to the catalyst-containing reactor tubes for cracking. The overhead vapour containing ammonia is partially condensed by a condenser (82) and the two-phase fluid is phase separated in separator (80) to produce condensed liquid which is fed (line 78) to the column system (72) as reflux, and the water-depleted ammonia feed vapour (line 76).

The aqueous bottoms liquid from the column system (72) can be purged (line 86) or reboiled. In this regard, the aqueous bottoms liquid (line 88) can be warmed and partially vaporized in the heat exchanger (E101) before being fed via line 90 to a separator (92). Alternatively, or in addition, the aqueous bottoms liquid (line 88) can be warmed and partially vaporized using an electrically powered heater (not shown). The separator (92) separates the liquid and vapour portions of the reboiled aqueous bottoms liquid. The vapour portion is fed back to the distillation column system (72) via line 94 to provide vapour for the column system. The liquid portion of the reboiled liquid, now a water-rich liquid with the majority of the ammonia stripped out, is fed to the scrubbing column (60) via line 96. Alternatively, the warmed and partially vaporized aqueous bottoms liquid (line 90) can be fed directly back to the distillation system (72) (not shown).

The water-rich liquid (line 96) derived from the reboiled aqueous bottoms liquid is cooled prior to entry into scrubbing column (60). Preferably, the cooling is achieved by heat exchange against aqueous ammonia solution (lines 106 & 108) in a heat exchanger (98). The cooled water-rich liquid (line 100) is cooled further by heat exchange against a coolant in heat exchanger (102) prior to being fed into the scrubbing column (60).

The ammonia depleted cracked gas is fed (line 62) to a first PSA device (26). The cracked gas is separated to form a first hydrogen product gas (line 30) and tail gas (line 54). The tail gas can be fed (line 54) back to the furnace, optionally via heat exchanger (E101) and mixer (42) (not shown).

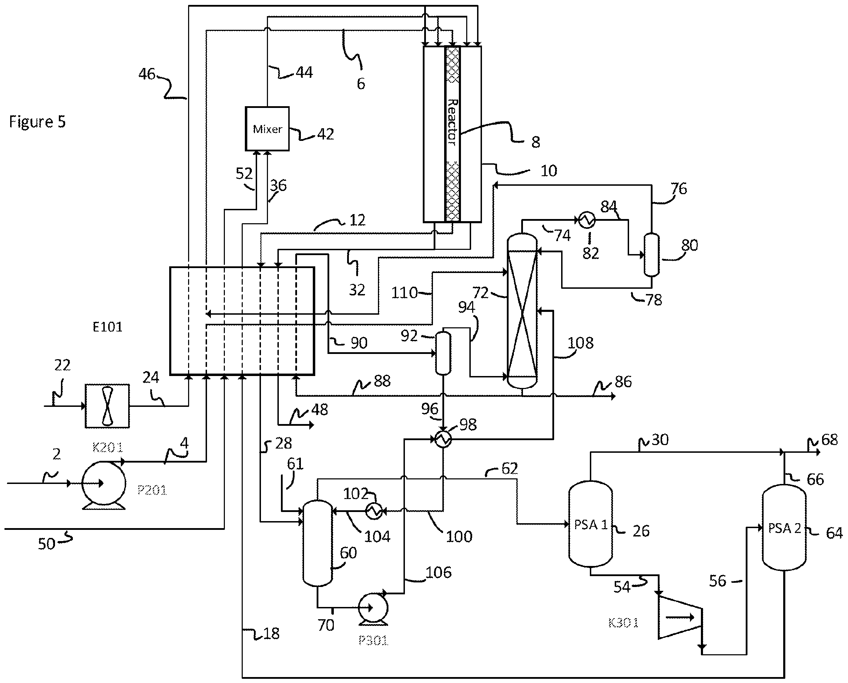

In one alternative, as shown in Fig. 4 and Fig. 5, the tail gas (line 54) from the first PSA device (26) is compressed in a compressor (K301) to produce compressed PSA tail gas (line 56) which is fed to a second PSA device (64) to produce a second hydrogen product gas (line 66) and a second PSA tail gas (line 18). The second hydrogen product gas (line 66) is combined with the hydrogen product gas (line 30) from the first PSA device (26) to produce a combined hydrogen product gas (line 68). The second PSA tail gas (line 18) is warmed by heat exchange against the cracked gas (line 12) and the flue gas (line 32) in the heat exchanger (E101) and then fed as fuel (lines 36 & 44) to the furnace (10).

Optionally, a portion of the first PSA tail gas (from line 54) can be combined with the second PSA tail gas (line 18) to produce a combined PSA tail gas which can then be used as fuel in the furnace (10).

The second PSA tail gas, or the combined PSA tail gas, may optionally be fed directly to the furnace (10) without heating and/or mixing with the primary fuel (line 50 & 52) (not shown).

In another embodiment with only a single PSA device (26), the compressed PSA tail gas (line 56) can be recycled back to the first PSA device (26) for purification with the cooled ammonia-depleted cracked gas (62) (not shown).

In further embodiments, a first part of the first PSA tail gas (line 54) can be compressed in a compressor (K301) to produce compressed PSA tail gas (line 56) and further processed as described above. However, a second part (not shown) of the first PSA tail gas can be fed back to the furnace via a flow control valve (not shown). The valve could control the ratio of the PSA tail gas used a fuel to the primary fuel, thereby controlling the carbon intensity of the process.

Water may need to be removed from the feed ammonia to prevent damage to the ammonia cracking catalyst. Some catalysts, for example iron-based catalysts, are known to be water intolerant and are not compatible with feedstock containing water. Unfortunately, ammonia typically has small quantities of water added to it to prevent stress corrosion cracking in vessels during shipping and storage. If this water is removed, any suitable cracking catalysts may be used, including water intolerant catalysts.

Water removal can be incorporated into the distillation column system as shown in Fig. 5. The features of the process in Fig. 5 that are common to the processes of Figs. 1 to 4 have been given the same reference numerals. The following is a discussion of the additional features in Fig. 5.

In Fig. 5, pressurized liquid ammonia feed (line 4) is warmed and at least partially vaporised in the heat exchange (E101). The ammonia is evaporated at the required pressure, to ensure that the water was also carried through to the distillation system with the vaporised ammonia.

The warmed and vaporised ammonia feed (line 110) is fed to the distillation system (72), usually at an intermediate location of the column. The overhead vapour produced in the column system is substantially free of water (e.g. contains about 1 ppm water) and contains the ammonia from the feed, together with the ammonia recovered from the cracked gas.

The recovered ammonia (line 76) is returned to the heat exchange (E101) to be heated further before being fed (line 6) to the reaction tubes of a reactor (8).

The invention will now be illustrated with reference to the following invention Examples and by comparison with the following Reference Examples.

### REFERENCE EXAMPLE 1

The process depicted in Fig. 2 has been simulated by computer (Aspen Plus, ver. 10, Aspen Technology, Inc.) and the results are depicted in Table 1. This example assumes an equilibrium for the cracking reaction at 11 bar and 500°C.

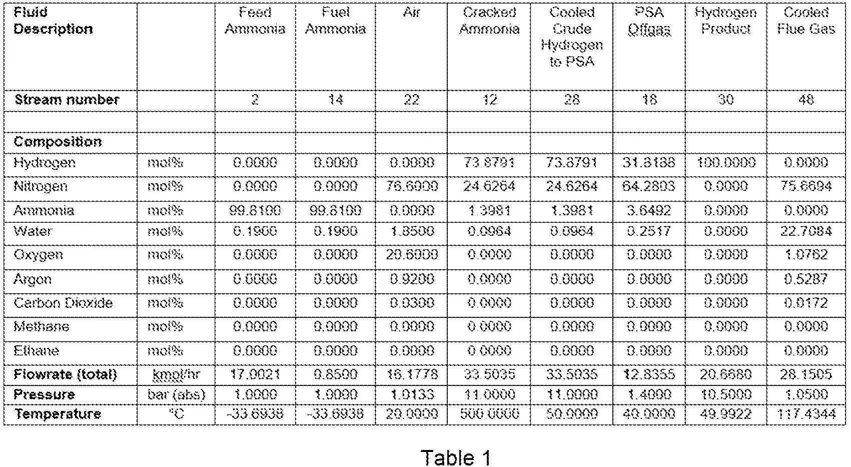

In this Reference Example, hydrogen recovery from the ammonia is 77.18% with the PSA recovery at 83.5%. The total power of the ammonia feed pump (P201), the ammonia fuel pump (P202) and the air fan (K201) is about 1.36 kW. In addition, the percentage of ammonia in the PSA offgas is 3.6492%.

### REFERENCE EXAMPLE 2

The process depicted in Fig. 3 has been simulated by computer (Aspen Plus, ver. 10) and the results are depicted in Table 2. This example assumes an equilibrium for the cracking reaction at 11 bar and 500°C.

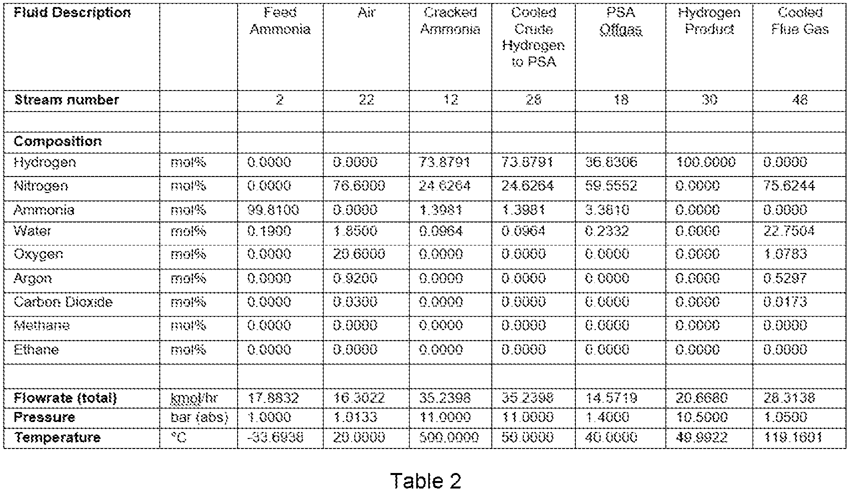

In this Reference Example, hydrogen recovery from the ammonia is 77.05% with the PSA recovery at 79.4%. The total power of the ammonia feed pump (P201) and the air fan (K201) is about 1.37 kW. In addition, the percentage of ammonia in the PSA offgas is 3.3810%.

### REFERENCE EXAMPLE 3

The process depicted in Fig. 4 has been simulated by computer (Aspen Plus, ver. 10) and the results are depicted in Table 3. For the purposes of the simulations, an equilibrium for the cracking reaction at 11 bar and 500 °C was assumed.

**Table 3**

| **Fluid Description** | | Feed Ammonia | NG Fuel | Air | Cracked Ammonia | Cooled crude H2 | Feed to PSA 1 | PSA1 Offgas |
|---|---|---|---|---|---|---|---|---|
| **Stream number** | | 2 | 50 | 22 | 12 | 28 | 62 | 54 |
| | | | | | | | | |

| **Composition** | | | | | | | | |
|---|---|---|---|---|---|---|---|---|
| Hydrogen | mol% | 0.000 | 0.000 | 0.000 | 73.881 | 73.881 | 74.754 | 32.822 |
| Nitrogen | mol% | 0.000 | 1.003 | 76.600 | 24.627 | 24.627 | 24.918 | 66.307 |
| Ammonia | mol% | 99.810 | 0.000 | 0.000 | 1.398 | 1.398 | 0.024 | 0.063 |
| Water | mol% | 0.190 | 0.000 | 1.850 | 0.094 | 0.094 | 0.304 | 0.809 |
| Oxygen | mol% | 0.000 | 0.000 | 20.600 | 0.000 | 0.000 | 0.000 | 0.000 |
| Argon | mol% | 0.000 | 0.000 | 0.920 | 0.000 | 0.000 | 0.000 | 0.000 |
| Carbon Dioxide | mol% | 0.000 | 0.502 | 0.030 | 0.000 | 0.000 | 0.000 | 0.000 |
| Methane | mol% | 0.000 | 94.281 | 0.000 | 0.000 | 0.000 | 0.000 | 0.000 |
| Ethane | mol% | 0.000 | 4.214 | 0.000 | 0.000 | 0.000 | 0.000 | 0.000 |
| **Flowrate (total)** | kmol/hr | 14.283 | 1.300 | 16.019 | 28.930 | 28.930 | 28.591 | 10.745 |
| **Pressure** | bar (abs) | 1.000 | 10.113 | 1.013 | 11.000 | 11.000 | 11.000 | 1.400 |
| **Temperature** | °C | -33.694 | 30.000 | 20.000 | 500.000 | 5.000 | 50.000 | 40.000 |
| | | | | | | | | |

| **Fluid Description** | | PSA2 Offgas | stripper offgas | Wash Water | Purge Stream | Washed, compressed PSA offgas | H2 Product | Flue Gas |
|---|---|---|---|---|---|---|---|---|
| **Stream number** | | 18 | 76 | 61 | 86 | 56 | 68 | 48 |
| | | | | | | | | |

| **Composition** | | | | | | | | |
|---|---|---|---|---|---|---|---|---|
| Hydrogen | mol% | 8.950 | 0.144 | 0.000 | 0.000 | 32.952 | 100.000 | 0.000 |
| Nitrogen | mol% | 90.401 | 0.033 | 0.000 | 0.000 | 66.570 | 0.000 | 78.032 |
| Ammonia | mol% | 0.083 | 99.823 | 0.000 | 0.204 | 0.061 | 0.000 | 0.000 |
| Water | mol% | 0.567 | 0.000 | 100.000 | 99.796 | 0.417 | 0.000 | 14.758 |
| Oxygen | mol% | 0.000 | 0.000 | 0.000 | 0.000 | 0.000 | 0.000 | 1.206 |
| Argon | mol% | 0.000 | 0.000 | 0.000 | 0.000 | 0.000 | 0.000 | 0.592 |
| Carbon Dioxide | mol% | 0.000 | 0.000 | 0.000 | 0.000 | 0.000 | 0.000 | 5.412 |
| Methane | mol% | 0.000 | 0.000 | 0.000 | 0.000 | 0.000 | 0.000 | 0.000 |
| Ethane | mol% | 0.000 | 0.000 | 0.000 | 0.000 | 0.000 | 0.000 | 0.000 |
| **Flowrate (total)** | kmol/hr | 7.881 | 0.398 | 0.076 | 0.017 | 10.702 | 20.668 | 24.876 |
| **Pressure** | bar (abs) | 1.358 | 11.000 | 12.000 | 11.000 | 11.000 | 10.500 | 1.050 |
| **Temperature** | °C | 40.000 | 27.997 | 30.000 | 183.438 | 30.000 | 47.259 | 210.625 |

In this Reference Example, hydrogen recovery from the ammonia is 96.47%. In addition, the percentage of ammonia in the PSA offgas from the second PSA is 0.083% One can see that the crude hydrogen has had a reduction in ammonia content from 1.398 to 0.024%. Not all of the ammonia has been recovered from the cracked gas. There is an optimization to be carried out as more ammonia recovery requires more reboiler duty in the stripping column and there is a limit to the heat available for this duty within the process without impacting the efficiency of the process.

### REFERENCE EXAMPLE 4

The process depicted in Fig. 4 has been simulated by computer (Aspen Plus, ver. 10) and the results are depicted in Table 4. For the purposes of the simulations, an equilibrium for the cracking reaction at 21 bar and 500 °C was assumed.

**Table 4**

| **Fluid Description** | | Feed Ammonia | NG Fuel | Air | Cracked Ammonia | Cooled crude H2 | Feed to PSA 1 | PSA1 Offgas |
|---|---|---|---|---|---|---|---|---|
| **Stream number** | | 2 | 50 | 22 | 12 | 28 | 62 | 54 |
| | | | | | | | | |

| **Composition** | | | | | | | | |
|---|---|---|---|---|---|---|---|---|
| Hydrogen | mol% | 0.000 | 0.000 | 0.000 | 72.971 | 72.971 | 74.792 | 32.866 |
| Nitrogen | mol% | 0.000 | 1.003 | 76.600 | 24.323 | 24.323 | 24.931 | 66.396 |
| Ammonia | mol% | 99.810 | 0.000 | 0.000 | 2.614 | 2.614 | 0.029 | 0.078 |
| Water | mol% | 0.190 | 0.000 | 1.850 | 0.093 | 0.093 | 0.248 | 0.660 |
| Oxygen | mol% | 0.000 | 0.000 | 20.600 | 0.000 | 0.000 | 0.000 | 0.000 |
| Argon | mol% | 0.000 | 0.000 | 0.920 | 0.000 | 0.000 | 0.000 | 0.000 |
| Carbon Dioxide | mol% | 0.000 | 0.502 | 0.030 | 0.000 | 0.000 | 0.000 | 0.000 |
| Methane | mol% | 0.000 | 94.281 | 0.000 | 0.000 | 0.000 | 0.000 | 0.000 |
| Ethane | mol% | 0.000 | 4.214 | 0.000 | 0.000 | 0.000 | 0.000 | 0.000 |
| | | | | | | | | |
| **Flowrate (total)** | kmol/hr | 14.286 | 1.304 | 16.070 | 29.293 | 29.293 | 28.577 | 10.730 |
| **Pressure** | bar (abs) | 1.000 | 10.113 | 1.013 | 21.000 | 21.000 | 21.000 | 1.400 |
| **Temperature** | °C | -33.694 | 30.000 | 20.000 | 500.000 | 5.000 | 50.000 | 40.000 |
| | | | | | | | | |

| **Fluid Description** | | PSA2 Offgas | stripper offgas | Wash Water | Purge Stream | Washed, compressed PSA offgas | H2 Product | Flue Gas |
|---|---|---|---|---|---|---|---|---|
| **Stream number** | | 18 | 76 | 61 | 86 | 56 | 68 | 48 |
| | | | | | | | | |

| **Composition** | | | | | | | | |
|---|---|---|---|---|---|---|---|---|
| Hydrogen | mol% | 8.970 | 0.222 | 0.000 | 0.000 | 33.008 | 100.000 | 0.000 |
| Nitrogen | mol% | 90.609 | 0.047 | 0.000 | 0.000 | 66.683 | 0.000 | 78.075 |
| Ammonia | mol% | 0.102 | 99.731 | 0.000 | 0.430 | 0.075 | 0.000 | 0.000 |
| Water | mol% | 0.319 | 0.000 | 100.000 | 99.570 | 0.235 | 0.000 | 14.703 |
| Oxygen | mol% | 0.000 | 0.000 | 0.000 | 0.000 | 0.000 | 0.000 | 1.208 |
| Argon | mol% | 0.000 | 0.000 | 0.000 | 0.000 | 0.000 | 0.000 | 0.593 |
| Carbon Dioxide | mol% | 0.000 | 0.000 | 0.000 | 0.000 | 0.000 | 0.000 | 5.421 |
| Methane | mol% | 0.000 | 0.000 | 0.000 | 0.000 | 0.000 | 0.000 | 0.000 |
| Ethane | mol% | 0.000 | 0.000 | 0.000 | 0.000 | 0.000 | 0.000 | 0.000 |
| | | | | | | | | |
| **Flowrate (total)** | kmol/hr | 7.863 | 0.757 | 0.504 | 0.463 | 10.684 | 20.668 | 24.913 |
| **Pressure** | bar (abs) | 1.358 | 21.000 | 22.000 | 21.000 | 21.000 | 20.500 | 1.050 |
| **Temperature** | °C | 40.000 | 51.243 | 30.000 | 213.691 | 30.000 | 47.260 | 160.735 |

In this Reference Example, hydrogen recovery from the ammonia is 96.45%. In addition, one can see that the crude hydrogen has had a reduction in ammonia content from 2.614% to 0.029%.

### INVENTION EXAMPLE 1

The process depicted in Fig. 5 has been simulated by computer (Aspen Plus, ver. 10) and the results are depicted in Table 5. For the purposes of the simulations, an equilibrium for the cracking reaction at 11 bar and 500 °C was assumed.

**Table 5**

| **Fluid Description** | | Feed Ammonia | NG Fuel | Air | Cracked Ammonia | Cooled crude H2 | Feed to PSA 1 | PSA1 Offgas |
|---|---|---|---|---|---|---|---|---|
| **Stream number** | | 2 | 50 | 22 | 12 | 28 | 62 | 54 |
| | | | | | | | | |

| **Composition** | | | | | | | | |
|---|---|---|---|---|---|---|---|---|
| Hydrogen | mol% | 0.000 | 0.000 | 0.000 | 73.950 | 73.950 | 74.707 | 32.766 |
| Nitrogen | mol% | 0.000 | 1.003 | 76.600 | 24.650 | 24.650 | 24.902 | 66.194 |
| Ammonia | mol% | 99.810 | 0.000 | 0.000 | 1.401 | 1.401 | 0.087 | 0.232 |
| Water | mol% | 0.190 | 0.000 | 1.850 | 0.000 | 0.000 | 0.304 | 0.807 |
| Oxygen | mol% | 0.000 | 0.000 | 20.600 | 0.000 | 0.000 | 0.000 | 0.000 |
| Argon | mol% | 0.000 | 0.000 | 0.920 | 0.000 | 0.000 | 0.000 | 0.000 |
| Carbon Dioxide | mol% | 0.000 | 0.502 | 0.030 | 0.000 | 0.000 | 0.000 | 0.000 |
| Methane | mol% | 0.000 | 94.281 | 0.000 | 0.000 | 0.000 | 0.000 | 0.000 |
| Ethane | mol% | 0.000 | 4.214 | 0.000 | 0.000 | 0.000 | 0.000 | 0.000 |
| **Flowrate (total)** | kmol/hr | 14.274 | 1.293 | 16.015 | 28.824 | 28.824 | 28.531 | 10.733 |
| **Pressure** | bar (abs) | 1.000 | 10.113 | 1.013 | 11.000 | 11.000 | 11.000 | 1.400 |
| **Temperature** | °C | -33.694 | 30.000 | 20.000 | 500.000 | 5.000 | 50.000 | 40.000 |
| | | | | | | | | |

| **Fluid Description** | | PSA2 Offgas | stripper offgas | Wash Water | Purge Stream | Washed, compressed PSA offgas | H2 Product | Flue Gas |
|---|---|---|---|---|---|---|---|---|
| **Stream number** | | 18 | 76 | 61 | 86 | 56 | 68 | 48 |
| | | | | | | | | |

| **Composition** | | | | | | | | |
|---|---|---|---|---|---|---|---|---|
| Hydrogen | mol% | 8.930 | 0.005 | 0.000 | 0.000 | 32.899 | 100.000 | 0.000 |
| Nitrogen | mol% | 90.205 | 0.001 | 0.000 | 0.000 | 66.463 | 0.000 | 78.008 |
| Ammonia | mol% | 0.306 | 99.994 | 0.000 | 0.000 | 0.226 | 0.000 | 0.000 |
| Water | mol% | 0.559 | 0.000 | 100.000 | 0.000 | 0.412 | 0.000 | 14.804 |
| Oxygen | mol% | 0.000 | 0.000 | 0.000 | 0.000 | 0.000 | 0.000 | 1.210 |
| Argon | mol% | 0.000 | 0.000 | 0.000 | 0.000 | 0.000 | 0.000 | 0.593 |
| Carbon Dioxide | mol% | 0.000 | 0.000 | 0.000 | 0.000 | 0.000 | 0.000 | 5.386 |
| Methane | mol% | 0.000 | 0.000 | 0.000 | 0.000 | 0.000 | 0.000 | 0.000 |
| Ethane | mol% | 0.000 | 0.000 | 0.000 | 0.000 | 0.000 | 0.000 | 0.000 |
| **Flowrate (total)** | kmol/hr | 7.876 | 14.614 | 0.060 | 0.000 | 10.690 | 20.611 | 24.866 |
| **Pressure** | bar (abs) | 1.358 | 11.000 | 12.000 | MISSING | 11.000 | 10.500 | 1.050 |
| **Temperature** | °C | 40.000 | 28.015 | 30.000 | MISSING | 30.000 | 47.259 | 120.256 |

In this Invention Example, hydrogen recovery from the ammonia is 96.41%. In addition, one can see that the crude hydrogen has had a reduction in ammonia content from 1.401% to 0.087%.

### INVENTION EXAMPLE 2

The process depicted in Fig. 5 has been simulated by computer (Aspen Plus, ver. 10) and the results are depicted in Table 6. For the purposes of the simulations, an equilibrium for the cracking reaction at 21 bar and 500°C was assumed.

**Table 6**

| **Fluid Description** | | Feed Ammonia | NG Fuel | Air | Cracked Ammonia | Cooled crude H2 | Feed to PSA 1 | PSA1 Offgas |
|---|---|---|---|---|---|---|---|---|
| **Stream number** | | 2 | 50 | 22 | 12 | 28 | 62 | 54 |
| | | | | | | | | |

| **Composition** | | | | | | | | |
|---|---|---|---|---|---|---|---|---|
| Hydrogen | mol% | 0.000 | 0.000 | 0.000 | 73.036 | 73.036 | 74.763 | 32.832 |
| Nitrogen | mol% | 0.000 | 1.003 | 76.600 | 24.345 | 24.345 | 24.921 | 66.326 |
| Ammonia | mol% | 99.810 | 0.000 | 0.000 | 2.619 | 2.619 | 0.053 | 0.142 |
| Water | mol% | 0.190 | 0.000 | 1.850 | 0.000 | 0.000 | 0.263 | 0.700 |
| Oxygen | mol% | 0.000 | 0.000 | 20.600 | 0.000 | 0.000 | 0.000 | 0.000 |
| Argon | mol% | 0.000 | 0.000 | 0.920 | 0.000 | 0.000 | 0.000 | 0.000 |
| Carbon Dioxide | mol% | 0.000 | 0.502 | 0.030 | 0.000 | 0.000 | 0.000 | 0.000 |
| Methane | mol% | 0.000 | 94.281 | 0.000 | 0.000 | 0.000 | 0.000 | 0.000 |
| Ethane | mol% | 0.000 | 4.214 | 0.000 | 0.000 | 0.000 | 0.000 | 0.000 |
| | | | | | | | | |
| **Flowrate (total)** | kmol/hr | 14.290 | 1.301 | 16.046 | 29.263 | 29.263 | 28.586 | 10.741 |
| **Pressure** | bar (abs) | 1.000 | 10.113 | 1.013 | 21.000 | 21.000 | 21.000 | 1.400 |
| **Temperature** | °C | -33.694 | 30.000 | 20.000 | 500.000 | 5.000 | 50.000 | 40.000 |
| | | | | | | | | |

| **Fluid Description** | | PSA2 Offgas | stripper offgas | Wash Water | Purge Stream | Washed, compressed PSA offgas | H2 Product | Flue Gas |
|---|---|---|---|---|---|---|---|---|
| **Stream number** | | 18 | 76 | 61 | 86 | 56 | 68 | 48 |
| | | | | | | | | |

| **Composition** | | | | | | | | |
|---|---|---|---|---|---|---|---|---|
| Hydrogen | mol% | 8.963 | 0.006 | 0.000 | 0.000 | 32.988 | 100.000 | 0.000 |
| Nitrogen | mol% | 90.537 | 0.001 | 0.000 | 0.000 | 66.643 | 0.000 | 78.072 |
| Ammonia | mol% | 0.184 | 99.992 | 0.000 | 0.000 | 0.136 | 0.000 | 0.000 |
| Water | mol% | 0.316 | 0.000 | 100.000 | 0.000 | 0.232 | 0.000 | 14.729 |
| Oxygen | mol% | 0.000 | 0.000 | 0.000 | 0.000 | 0.000 | 0.000 | 1.191 |
| Argon | mol% | 0.000 | 0.000 | 0.000 | 0.000 | 0.000 | 0.000 | 0.593 |
| Carbon Dioxide | mol% | 0.000 | 0.000 | 0.000 | 0.000 | 0.000 | 0.000 | 5.414 |
| Methane | mol% | 0.000 | 0.000 | 0.000 | 0.000 | 0.000 | 0.000 | 0.000 |
| Ethane | mol% | 0.000 | 0.000 | 0.000 | 0.000 | 0.000 | 0.000 | 0.000 |
| | | | | | | | | |
| **Flowrate (total)** | kmol/hr | 7.868 | 15.015 | 0.048 | 0.000 | 10.690 | 20.666 | 24.895 |
| **Pressure** | bar (abs) | 1.358 | 21.000 | 22.000 | | 21.000 | 20.500 | 1.050 |
| **Temperature** | °C | 40.000 | 51.374 | 30.000 | | 30.000 | 47.260 | 210.043 |

In this Invention Example, hydrogen recovery from the ammonia is 96.41%. In addition, one can see that the crude hydrogen has had a reduction in ammonia content from 2.619% to 0.053%.

The present invention is not to be limited in scope by the specific aspects or embodiments disclosed in the examples which are intended as illustrations of a few aspects of the invention and any embodiments that are functionally equivalent are within the scope of this invention. Various modifications of the invention in addition to those shown and described herein will become apparent to those skilled in the art and are intended to fall within the scope of the appended claims.

## Claims

1. A method for producing hydrogen from ammonia, comprising:
pressurizing liquid ammonia feed comprising water as a trace impurity to produce pressurized liquid ammonia feed;
combusting a primary fuel in a furnace to heat catalyst-containing reactor tubes and to form a flue gas;
supplying heated ammonia to the catalyst-containing reactor tubes to cause cracking of the ammonia into a cracked gas containing hydrogen gas, nitrogen gas and residual ammonia;
cooling the cracked gas by heat exchange to produce cooled cracked gas;
scrubbing ammonia from the cooled cracked gas using water in a scrubbing column to produce ammonia-depleted cracked gas and an aqueous ammonia solution;
stripping ammonia from the aqueous ammonia solution in a distillation column system to produce water-depleted ammonia feed vapour and an aqueous ammonia-depleted bottoms liquid;
heating the water-depleted ammonia feed vapour by heat exchange with one or more hot fluids to produce the heated ammonia;
purifying the ammonia-depleted cracked gas in a first PSA device to produce a hydrogen product gas and a first PSA tail gas;
**characterised in that** the pressurized liquid ammonia feed is heated and vaporised by heat exchange against the one or more hot fluids to produce ammonia feed vapour which is fed to the distillation column system to remove water from the ammonia feed vapour,
wherein the one or more hot fluids comprises the cracked gas and/or the flue gas.

2. A method according to Claim 1 comprising reboiling the bottoms liquid in or from the distillation column system by heat exchange against the one or more hot fluids.

3. A method according to Claim 1 or Claim 2 comprising reboiling the bottoms liquid in or from the distillation column system using an electrically powered heater.

4. A method according to Claim 3, wherein the heater is powered at least in part by electricity generated from at least one renewable source.

5. A method according to any of the preceding claims comprising partially condensing overhead vapour in or from the distillation column system by heat exchange to produce a condensed liquid and the water-depleted ammonia feed vapour, said condensed liquid being recycled as reflux to the distillation column system.

6. A method according to any of the preceding claims comprising feeding the aqueous bottoms liquid from the distillation column system to the scrubbing column.

7. A method according to Claim 6, wherein the aqueous ammonia solution being fed to the distillation column system is warmed by heat exchange against the aqueous bottoms liquid being fed to the scrubbing column.

8. A method according to Claim 6 or Claim 7, wherein the aqueous bottoms liquid is further cooled by heat exchange prior to being fed to the scrubbing column.

9. A method according to any of the preceding claims comprising pumping the aqueous ammonia solution from the scrubbing column to the distillation column system.

10. A method according to any of the preceding claims comprising:
compressing the first PSA tail gas to produce compressed first PSA tail gas; and
recycling the compressed PSA tail gas to the first PSA device to recover further hydrogen gas.

11. A method according to any of Claims 1 to 9 comprising:
compressing the first PSA tail gas to produce compressed first PSA tail gas; and
purifying the compressed first PSA tail gas in a second PSA device to produce further hydrogen product gas and a second PSA tail gas.

12. A method according to Claim 11 comprising combusting the second PSA tail gas as a secondary fuel in the furnace.

13. Apparatus for producing hydrogen from ammonia, comprising:
a pump for pressurizing liquid ammonia feed comprising water as a trace impurity to produce pressurised liquid ammonia feed;
at least one first heat exchanger in fluid communication with the pump for vaporizing pressurised liquid ammonia by heat exchange with one or more hot fluids to produce ammonia feed vapour;
catalyst-containing reactor tubes in fluid communication with the first heat exchanger(s) for cracking heated ammonia from the first heat exchanger(s) to produce a cracked gas containing hydrogen gas, nitrogen gas and residual ammonia;
a furnace in thermal communication with the catalyst-containing reactor tubes for combustion of a fuel to heat the catalyst-containing reactor tubes and to form a flue gas;
a flue gas conduit for feeding flue gas from the furnace to the at least one first heat exchanger(s);
a cracked gas conduit for feeding cracked gas to the at least one first heat exchanger(s);
a scrubbing column in fluid communication with the at least one first heat exchanger(s) for scrubbing ammonia from cooled cracked gas using water to produce ammonia-depleted cracked gas and an aqueous ammonia solution;
a distillation column system in fluid communication with the scrubbing column for stripping ammonia from the aqueous ammonia solution to produce water-depleted ammonia feed vapour and an aqueous ammonia-depleted bottoms liquid;
an ammonia feed vapour conduit for feeding ammonia feed vapour from the first heat exchanger(s) to the distillation column system;
a water-depleted ammonia feed vapour conduit for feeding water-depleted ammonia feed from the distillation column system to the first heat exchanger(s) for further heating by heat exchange with one or more of the hot fluids to produce the heated ammonia;
a PSA device in fluid communication with the scrubbing column for purifying the ammonia-depleted cracked gas to produce a hydrogen product gas and a first PSA tail gas; and
a hydrogen product gas conduit for removing hydrogen product gas from the PSA device.

14. Apparatus according to Claim 13 wherein the distillation column system comprises a bottoms reboiler integrated thermally with the first heat exchanger(s).

15. Apparatus according to Claim 13 wherein the distillation column system comprises an electrically powered reboiler.

16. Apparatus according to any of Claims 13 to 15 wherein the distillation column system comprises an overhead condenser for partially condensing overhead vapor by heat exchange with a coolant.

17. Apparatus according to Claim 16 comprising a reflux conduit for feeding condensed liquid as reflux from the overhead condenser to the distillation column system.

18. Apparatus according to any one of Claims 13 to 17 comprising an aqueous bottoms liquid conduit for supplying aqueous bottoms liquid from the distillation column system to the scrubbing column.

19. Apparatus according to Claim 18 comprising a second heat exchanger for warming aqueous ammonia solution from the scrubbing column by heat exchange against aqueous bottoms liquid from the distillation column system.

20. Apparatus according to Claim 18 or Claim 19 comprising a third heat exchanger for cooling aqueous bottoms liquid from the distillation column system by heat exchange with a coolant.

21. Apparatus according to any of Claims 13 to 20 comprising a pump for pumping aqueous ammonia solution from the scrubbing column to the distillation column system.

22. Apparatus according to any of Claims 13 to 21 comprising:
a compressor for compressing first PSA tail gas to produce compressed first PSA tail gas; and
a recycle conduit for recycling compressed first PSA tail gas to the first PSA device.

23. Apparatus according to any of Claims 13 to 21 comprising:
a compressor for compressing first PSA tail gas to produce compressed first PSA tail gas; and
a second PSA device in fluid communication with the compressor for purifying the compressed first PSA tail gas to produce further hydrogen product gas and a second PSA tail gas.

24. Apparatus according to any of Claims 13 to 23 comprising a conduit for feeding second PSA tail gas to the first heat exchanger(s) for heating by heat exchange against the one or more hot fluids prior to combustion in the furnace.

## Patentansprüche

1. Ein Verfahren zum Erzeugen von Wasserstoff aus Ammoniak, umfassend:
Unterdrucksetzen einer flüssigen Ammoniakzufuhr, die Wasser als eine Spurenverunreinigung enthält, um eine unter Druck gesetzte flüssige Ammoniakzufuhr zu erzeugen,
Verbrennen eines primären Brennstoffs in einem Ofen, um Reaktorröhren, die einen Katalysator enthalten, zu erhitzen und ein Rauchgas zu bilden,
Zuführen des erhitzten Ammoniaks zu den einen Katalysator enthaltenden Reaktorröhren, um ein Spalten des Ammoniaks in ein gespaltenes Gas, das Wasserstoffgas, Stickstoffgas und Restammoniak enthält, zu veranlassen,
Abkühlen des gespaltenen Gases durch einen Wärmeaustausch, um ein abgekühltes gespaltenes Gas zu erzeugen,
Waschen von Ammoniak aus dem abgekühlten gespaltenen Gas unter Verwendung von Wasser in einer Waschkolonne, um ein ammoniakarmes gespaltenes Gas und eine wässrige Ammoniaklösung zu erzeugen,
Strippen von Ammoniak aus der wässrigen Ammoniaklösung in einem Destillationskolonnensystem, um einen wasserarmen Ammoniakzufuhrdampf und eine wässrige ammoniakarme Bodenflüssigkeit zu erzeugen,
Erhitzen des wasserarmen Ammoniakzufuhrdampfs durch einen Wärmetausch mit einer oder mehreren heißen Fluiden, um das erhitzte Ammoniak zu erzeugen,
Reinigen des ammoniakarmen gespaltenen Gases in einer ersten Druckwechsel-Adsorption (DWA)-Vorrichtung, um ein Wasserstoffproduktgas und ein erstes DWA-Restgas zu erzeugen,
**dadurch gekennzeichnet, dass** die unter Druck gesetzte flüssige Ammoniakzufuhr durch einen Wärmetausch gegen das eine oder die mehreren heißen Fluide erhitzt und verdampft wird, um einen Ammoniakzufuhrdampf zu erzeugen, der zu dem Destillationskolonnensystem geführt wird, um Wasser aus dem Ammoniakzufuhrdampf zu entfernen,
wobei die eine oder die mehreren heißen Fluide das gespaltene Gas und/oder das Rauchgas umfassen.

2. Verfahren nach Anspruch 1, das das Aufkochen der Bodenflüssigkeit in oder aus dem Destillationskolonnensystem durch einen Wärmetausch gegen das eine oder die mehreren heißen Fluide umfasst.

3. Verfahren nach Anspruch 1 oder 2, das das Aufkochen der Bodenflüssigkeit in oder aus dem Destillationskolonnensystem unter Verwendung eines elektrisch betriebenen Heizers umfasst.

4. Verfahren nach Anspruch 3, wobei der Heizer wenigstens teilweise mit einem aus wenigstens einer erneuerbaren Quelle erzeugten Strom betrieben wird.

5. Verfahren nach einem der vorstehenden Ansprüche, das das teilweise Kondensieren eines Kopfdampfes in oder aus dem Destillationskolonnensystem durch einen Wärmetausch umfasst, um eine kondensierte Flüssigkeit und den wasserarmen Ammoniakzufuhrdampf zu erzeugen, wobei die kondensierte Flüssigkeit als ein Rückfluss zu dem Destillationskolonnensystem zurückgeführt wird.

6. Verfahren nach einem der vorstehenden Ansprüche, das das Zuführen der wässrigen Bodenflüssigkeit von dem Destillationskolonnensystem zu der Waschkolonne umfasst.

7. Verfahren nach Anspruch 6, wobei die zu dem Destillationskolonnensystem zugeführte wässrige Ammoniaklösung durch einen Wärmetausch gegen die zu der Waschkolonne zugeführte wässrige Bodenflüssigkeit erwärmt wird.

8. Verfahren nach Anspruch 6 oder 7, wobei die wässrige Bodenflüssigkeit weiterhin durch einen Wärmetausch abgekühlt wird, bevor sie zu der Waschkolonne zugeführt wird.

9. Verfahren nach einem der vorstehenden Ansprüche, das das Pumpen der wässrigen Ammoniaklösung von der Waschkolonne zu dem Destillationskolonnensystem umfasst.

10. Verfahren nach einem der vorstehenden Ansprüche, das umfasst:
Komprimieren des ersten DWA-Restgases, um ein komprimiertes erstes DWA-Restgas zu erzeugen, und
Zurückführen des komprimierten DWA-Restgases zu der ersten DWA-Vorrichtung, um weiteres Wasserstoffgas zu gewinnen.

11. Verfahren nach einem der Ansprüche 1 bis 9, das umfasst:
Komprimieren des ersten PSA-Restgases, um ein komprimiertes erstes DWA-Restgas zu erzeugen, und
Reinigen des komprimierten ersten DWA-Restgases in einer zweiten DWA-Vorrichtung, um weiteres Wasserstoffproduktgas und ein zweites DWA-Restgas zu erzeugen.

12. Verfahren nach Anspruch 11, das das Verbrennen des zweiten DWA-Restgases als eines sekundären Brennstoffs in einem Ofen umfasst.

13. Vorrichtung zum Erzeugen von Wasserstoff aus Ammoniak, umfassend:
eine Pumpe zum Unterdrucksetzen einer flüssigen Ammoniakzufuhr, die Wasser als eine Spurenverunreinigung enthält, um eine unter Druck gesetzte flüssige Ammoniakzufuhr zu erzeugen,
wenigstens einen ersten Wärmetauscher, der in einer Fluidverbindung mit der Pumpe steht, für das Verdampfen des unter Druck gesetzten flüssigen Ammoniaks durch einen Wärmetausch mit einer oder mehreren heißen Fluiden, um einen Ammoniakzufuhrdampf zu erzeugen,
Reaktorröhren, die einen Katalysator enthalten und in einer Fluidverbindung mit dem oder den ersten Wärmetauschern stehen, für das Spalten des erhitzten Ammoniaks von dem oder den ersten Wärmetauschern, um ein gespaltenes Gas, das Wasserstoffgas, Stickstoffgas und Restammoniak enthält, zu erzeugen,
einen Ofen, der in einer thermischen Verbindung mit den einen Katalysator enthaltenden Reaktorröhren steht, für das Verbrennen eines Brennstoffs, um die einen Katalysator enthaltenden Reaktorröhren zu erhitzen und ein Rauchgas zu bilden,
eine Rauchgasleitung für das Zuführen des Rauchgases von dem Ofen zu dem wenigstens einen Wärmetauscher,
eine Spaltgasleitung für das Zuführen des gespaltenen Gases zu dem wenigstens einen Wärmetauscher,
eine Waschkolonne, die in einer Fluidverbindung mit dem wenigstens einen Wärmetauscher steht, für das Waschen von Ammoniak aus dem abgekühlten gespaltenen Gas unter Verwendung von Wasser, um ein ammoniakarmes gespaltenes Gas und eine wässrige Ammoniaklösung zu erzeugen,
ein Destillationskolonnensystem, das in einer Fluidverbindung mit der Waschkolonne steht, für das Strippen von Ammoniak aus der wässrigen Ammoniaklösung, um einen wasserarmen Ammoniakzufuhrdampf und eine wässrige ammoniakarme Bodenflüssigkeit zu erzeugen,
eine Ammoniakzufuhrgasleitung für das Zuführen des Ammoniakzufuhrgases von dem oder den ersten Wärmetauschern zu dem Destillationskolonnensystem,
eine Wasserarmes-Ammoniakzufuhrgas-Leitung für das Zuführen einer wasserarmen Ammoniakzufuhr von dem Destillationskolonnensystem zu dem oder den ersten Wärmetauschern für ein weiteres Erhitzen durch einen Wärmetausch mit einem oder mehreren heißen Fluiden, um das erhitzte Ammoniak zu erzeugen,
eine DWA-Vorrichtung, die in einer Fluidverbindung mit der Waschkolonne steht, für das Reinigen des ammoniakarmen gespaltenen Gases, um ein Wasserstoffproduktgas und ein erstes DWA-Restgas zu erzeugen, und
eine Wasserstoffproduktgasleitung für das Entfernen des Wasserstoffproduktgases aus der DWA-Vorrichtung.

14. Vorrichtung nach Anspruch 13, wobei das Destillationskolonnensystem einen Bodenaufkocher umfasst, der thermisch mit dem oder den ersten Wärmetauschern integriert ist.

15. Vorrichtung nach Anspruch 13, wobei das Destillationskolonnensystem einen elektrisch betriebenen Aufkocher umfasst.

16. Vorrichtung nach einem der Ansprüche 13 bis 15, wobei das Destillationskolonnensystem einen Kopfkondensator für ein teilweises Kondensieren eines Kopfdampfes durch einen Wärmetausch mit einem Kühlmittel umfasst.

17. Vorrichtung nach Anspruch 16, das eine Rückflussleitung für das Zuführen einer kondensierten Flüssigkeit als einen Rückfluss von dem Kopfkondensator zu dem Destillationskolonnensystem umfasst.

18. Vorrichtung nach einem der Ansprüche 13 bis 17, das eine Wässrige-Bodenflüssigkeit-Leitung für das Zuführen einer wässrigen Bodenflüssigkeit von dem Destillationskolonnensystem zu der Waschkolonne umfasst.

19. Vorrichtung nach Anspruch 18, das einen zweiten Wärmetauscher für das Erwärmen einer wässrigen Ammoniaklösung von der Waschsäule durch einen Wärmetausch gegen die wässrige Bodenflüssigkeit von dem Destillationskolonnensystem umfasst.

20. Vorrichtung nach Anspruch 18 oder 19, das einen dritten Wärmetauscher für das Abkühlen der wässrigen Bodenflüssigkeit von dem Destillationskolonnensystem durch einen Wärmetausch mit einem Kühlmittel umfasst.

21. Vorrichtung nach einem der Ansprüche 13 bis 20, die eine Pumpe für das Pumpen einer wässrigen Ammoniaklösung von der Waschkolonne zu dem Destillationskolonnensystem umfasst.

22. Vorrichtung nach einem der Ansprüche 13 bis 21, die umfasst:
einen Kompressor für das Komprimieren des ersten DWA-Endgases, um ein komprimiertes erstes DWA-Endgas zu erzeugen, und
eine Rückführleitung für das Rückführen des komprimierten DWA-Endgases zu der ersten DWA-Vorrichtung.

23. Vorrichtung nach einem der Ansprüche 13 bis 21, die umfasst:
einen Kompressor für das Komprimieren des ersten DWA-Endgases, um ein komprimiertes erstes DWA-Endgas zu erzeugen, und
eine zweite DWA-Vorrichtung, die in einer Fluidverbindung mit dem Kompressor steht, für das Reinigen des komprimierten ersten DWA-Endgases, um weiteres Wasserstoffproduktgas und ein zweites DWA-Endgas zu erzeugen.

24. Vorrichtung nach einem der Ansprüche 13 bis 23, das eine Leitung für das Zuführen des zweiten DWA-Endgases zu dem oder den ersten Wärmetauschern für ein Erhitzen durch einen Wärmetausch gegen das eine oder die mehreren heißen Fluide vor der Verbrennung in dem Ofen umfasst.

## Revendications

1. Procédé de production d'hydrogène à partir d'ammoniac, comprenant:
la mise sous pression d'une charge d'ammoniac liquide comprenant de l'eau sous forme d'impureté à l'état de traces pour produire une charge d'ammoniac liquide mise sous pression;
la combustion d'un combustible primaire dans un four pour chauffer des tubes de réacteur contenant un catalyseur et pour former un gaz de combustion;
l'apport d'ammoniac chauffé aux tubes de réacteur contenant un catalyseur pour provoquer le craquage de l'ammoniac en un gaz de craquage contenant du gaz hydrogène, du gaz azote et de l'ammoniac résiduel;
le refroidissement du gaz de craquage par échange de chaleur pour produire du gaz de craquage refroidi;
le lavage de l'ammoniac du gaz de craquage refroidi à l'aide d'eau dans une colonne de lavage pour produire du gaz de craquage appauvri en ammoniac et une solution aqueuse d'ammoniac;
le strippage de l'ammoniac de la solution aqueuse d'ammoniac dans un système de colonne de distillation pour produire une vapeur de charge d'ammoniac appauvrie en eau et un liquide aqueux de fond de colonne appauvri en ammoniac;
le chauffage de la vapeur de charge d'ammoniac appauvrie en eau par échange de chaleur avec un ou plusieurs fluides chauds pour produire l'ammoniac chauffé;
la purification du gaz de craquage appauvri en ammoniac dans un premier dispositif de PSA pour produire un gaz hydrogène produit et un premier gaz de queue de PSA;
**caractérisé en ce que** la charge d'ammoniac liquide mise sous pression est chauffée et vaporisée par échange de chaleur avec les un ou plusieurs fluides chauds pour produire une vapeur de charge d'ammoniac qui est chargée dans le système de colonne de distillation pour retirer l'eau de la vapeur de charge d'ammoniac,
dans lequel les un ou plusieurs fluides chauds comprennent le gaz de craquage et/ou le gaz de combustion.

2. Procédé selon la revendication 1, comprenant le rebouillage du liquide de fond de colonne dans ou depuis le système de colonne de distillation par échange de chaleur avec les un ou plusieurs fluides chauds.

3. Procédé selon la revendication 1 ou la revendication 2, comprenant le rebouillage du liquide de fond de colonne dans ou depuis le système de colonne de distillation à l'aide d'un réchauffeur alimenté électriquement.

4. Procédé selon la revendication 3, dans lequel le réchauffeur est alimenté au moins en partie par de l'électricité produite à partir d'au moins une source renouvelable.

5. Procédé selon l'une quelconque des revendications précédentes, comprenant la condensation partielle de la vapeur de tête dans ou depuis le système de colonne de distillation par échange de chaleur pour produire un liquide condensé et la vapeur de charge d'ammoniac appauvrie en eau, ledit liquide condensé étant recyclé comme reflux dans le système de colonne de distillation.

6. Procédé selon l'une quelconque des revendications précédentes, comprenant le chargement du liquide de fond de colonne aqueux depuis le système de colonne de distillation dans la colonne de lavage.

7. Procédé selon la revendication 6, dans lequel la solution aqueuse d'ammoniac chargée dans le système de colonne de distillation est chauffée par échange de chaleur avec le liquide de fond de colonne aqueux chargé dans la colonne de lavage.

8. Procédé selon la revendication 6 ou la revendication 7, dans lequel le liquide de fond de colonne aqueux est refroidi encore par échange de chaleur avant d'être chargé dans la colonne de lavage.

9. Procédé selon l'une quelconque des revendications précédentes, comprenant le pompage de la solution aqueuse d'ammoniac depuis la colonne de lavage dans le système de colonne de distillation.

10. Procédé selon l'une quelconque des revendications précédentes, comprenant:
la compression du premier gaz de queue de PSA pour produire un premier gaz de queue de PSA comprimé; et
le recyclage du gaz de queue de PSA comprimé dans le premier dispositif de PSA pour récupérer encore du gaz hydrogène.

11. Procédé selon l'une quelconque des revendications 1 à 9, comprenant:
la compression du premier gaz de queue de PSA pour produire un premier gaz de queue de PSA comprimé; et
la purification du premier gaz de queue de PSA comprimé dans un second dispositif de PSA pour produire encore du gaz hydrogène produit et un second gaz de queue de PSA.

12. Procédé selon la revendication 11, comprenant la combustion du second gaz de queue de PSA comme combustible secondaire dans le four.

13. Appareil de production d'hydrogène à partir d'ammoniac, comprenant:
une pompe pour mettre sous pression une charge d'ammoniac liquide comprenant de l'eau sous forme d'impureté à l'état de traces pour produire une charge d'ammoniac liquide mise sous pression;
au moins un premier échangeur de chaleur en communication fluidique avec la pompe pour vaporiser l'ammoniac liquide mis sous pression par échange de chaleur avec un ou plusieurs fluides chauds pour produire de la vapeur de charge d'ammoniac,
des tubes de réacteur contenant un catalyseur en communication fluidique avec le ou les premiers échangeurs de chaleur pour craquer l'ammoniac chauffé provenant du ou des premiers échangeurs de chaleur pour produire un gaz de craquage contenant du gaz hydrogène, du gaz azote et de l'ammoniac résiduel;
un four en communication thermique avec les tubes de réacteur contenant un catalyseur pour la combustion d'un combustible pour chauffer les tubes de réacteur contenant un catalyseur et former un gaz de combustion;
une conduite de gaz de combustion pour charger le gaz de combustion provenant du four dans le au moins un premier échangeur de chaleur;
une conduite de gaz de craquage pour charger le gaz de craquage dans le au moins un premier échangeur de chaleur;
une colonne de lavage en communication fluidique avec le au moins un premier échangeur de chaleur pour laver l'ammoniac provenant du gaz de craquage refroidi à l'aide d'eau pour produire du gaz de craquage appauvri en ammoniac et une solution aqueuse d'ammoniac;
un système de colonne de distillation en communication fluidique avec la colonne de lavage pour stripper l'ammoniac provenant de la solution aqueuse d'ammoniac pour produire une vapeur de charge d'ammoniac appauvrie en eau et un liquide aqueux de fond de colonne appauvri en ammoniac;
une conduite de vapeur de charge d'ammoniac pour charger la vapeur de charge d'ammoniac depuis le ou les premiers échangeurs de chaleur dans le système de colonne de distillation;
une conduite de vapeur de charge d'ammoniac appauvrie en eau pour charger la charge d'ammoniac appauvrie en eau depuis le système de colonne de distillation dans les un ou plusieurs premiers échangeurs de chaleur pour chauffer encore par échange de chaleur avec un ou plusieurs des fluides chauds pour produire l'ammoniac chauffé;
un dispositif de PSA en communication fluidique avec la colonne de lavage pour purifier le gaz de craquage appauvri en ammoniac pour produire un gaz hydrogène produit et un premier gaz de queue de PSA; et
une conduite de gaz hydrogène produit pour retirer le gaz hydrogène produit du dispositif de PSA.

14. Appareil selon la revendication 13, dans lequel le système de colonne de distillation comprend un rebouilleur de fond de colonne intégré thermiquement au(x) premier(s) échangeur(s) de chaleur.

15. Appareil selon la revendication 13, dans lequel le système de colonne de distillation comprend un rebouilleur alimenté électriquement.

16. Appareil selon l'une quelconque des revendications 13 à 15, dans lequel le système de colonne de distillation comprend un condenseur de tête pour condenser partiellement la vapeur de tête par échange de chaleur avec un fluide de refroidissement.

17. Appareil selon la revendication 16, comprenant une conduite de reflux pour charger le liquide condensé sous forme de reflux depuis le condenseur de tête dans le système de colonne de distillation.

18. Appareil selon l'une quelconque des revendications 13 à 17, comprenant une conduite de liquide de fond de colonne aqueux pour fournir le liquide de fond de colonne aqueux provenant du système de colonne de distillation à la colonne de lavage.

19. Appareil selon la revendication 18, comprenant un second échangeur de chaleur pour chauffer la solution aqueuse d'ammoniac provenant de la colonne de lavage par échange de chaleur avec le liquide de fond de colonne aqueux provenant du système de colonne de distillation.

20. Appareil selon la revendication 18 ou la revendication 19, comprenant un troisième échangeur de chaleur pour refroidir le liquide de fond de colonne aqueux provenant du système de colonne de distillation par échange de chaleur avec un fluide de refroidissement.

21. Appareil selon l'une quelconque des revendications 13 à 20, comprenant une pompe pour pomper la solution aqueuse d'ammoniac depuis la colonne de lavage dans le système de colonne de distillation.

22. Appareil selon l'une quelconque des revendications 13 à 21, comprenant:
un compresseur pour comprimer le premier gaz de queue de PSA pour produire un premier gaz de queue PSA comprimé; et
une conduite de recyclage pour recycler le premier gaz de queue de PSA comprimé dans le premier dispositif de PSA.

23. Appareil selon l'une quelconque des revendications 13 à 21, comprenant:
un compresseur pour comprimer le premier gaz de queue de PSA pour produire un premier gaz de queue de PSA comprimé; et
un second dispositif de PSA en communication fluidique avec le compresseur pour purifier le premier gaz de queue de PSA comprimé pour produire encore du gaz hydrogène produit et un second gaz de queue de PSA.

24. Appareil selon l'une quelconque des revendications 13 à 23, comprenant une conduite pour charger le second gaz de queue de PSA dans les un ou plusieurs premiers échangeurs de chaleur pour chauffer par échange de chaleur avec les un ou plusieurs fluides chauds avant la combustion dans le four.
